# FASCICULE DE BREVET EUROPEEN

(11) **EP 3 393 739 B1**
(45) Date de publication et mention de la délivrance du brevet: **18.09.2019**
(21) Numéro de dépôt: 16826384.6
(22) Date de dépôt: 15.12.2016
(51) Int. Cl.: B29C 33/06, B29C 45/73

(54) **DISPOSITIF DE RÉGULATION DE LA TEMPÉRATURE D'UN MOULE PAR DIODE VCSEL**
VORRICHTUNG ZUR STEUERUNG DER TEMPERATUR EINER FORM MIT EINER VCSEL-DIODE
DEVICE FOR CONTROLLING THE TEMPERATURE OF A MOLD BY MEANS OF A VCSEL DIODE

(30) Priorité: 22.12.2015 FR 1563032
(43) Date de publication de la demande: 31.10.2018
(73) Titulaire: Compagnie Plastic Omnium, 69007 Lyon (FR)
(72) Inventeur: GUILLIER, Stéphane, 01120 Dagneux (FR); TORRES, Olivier, 69230 Saint-Genis Laval (FR)
(74) Mandataire: LLR
(86) Numéro de dépôt international: PCT/FR2016/053463
(87) Numéro de publication internationale: WO 2017/109341

(56) Documents cités:
- EP-A1- 2 647 479
- Charles Daniel Fox ET AL: "A BASIC UNDERSTANDING OF RAPID MOLD SURFACE HEATING VIA LASER ENERGY", , 1 janvier 2011 (2011-01-01), XP055190609, Extrait de l'Internet: URL:http://rave.ohiolink.edu/etdc/view?acc _num=wright1341332102 [extrait le 2015-05-21]

## Description

La présente invention concerne un dispositif de régulation de la température d'un moule.

De façon générale, afin de réaliser une pièce en matériau plastique ou composite dans le domaine de la construction automobile, l'on utilise des moules d'injection ou de compression en matériau métallique dont on chauffe et refroidit alternativement les zones moulantes afin de conformer la matière contenue dans le moule à la forme désirée.

On entend ici par moule d'injection, un moule dont on ferme les parois, aussi appelées blocs, avant d'injecter de la matière plastique sous pression, et par moule de compression, un moule entre les parois duquel on dépose de la matière plastique avant de la comprimer à haute pression.

A cet effet, des dispositifs conventionnels de régulation de la température d'un moule sont généralement composés de moyens de chauffage et/ou de refroidissement par conduction d'eau chaude pressurisée, les moyens de chauffage fonctionnant notamment par induction, résistance électrique, ou par circulation de fluides (eau, huile... etc.) ou de gaz (vapeur sous pression).

De tels dispositifs présentent de nombreux inconvénients. S'agissant des dispositifs à moyens de chauffage par circulation de fluides, afin de chauffer les zones au contact de la pièce, les moyens de chauffage doivent traverser d'autres zones du moule (parois notamment), entraînant une déperdition de chaleur et une grande inertie dans les cycles de chauffe et de refroidissement. Les dispositifs à moyens de chauffage par induction ou résistance électrique permettent d'éviter en partie ces inconvénients, mais en présentent d'autres, tels qu'une très forte consommation énergétique et le fait de ne pouvoir être utilisés que pour former des pièces de petites dimensions et de forme sensiblement plane.

Outre la moindre efficacité énergétique de tels dispositifs, ils complexifient la conception et la réalisation du moule. Ceci est particulièrement le cas des dispositifs à moyens de chauffage par circulation de fluides qui imposent l'installation de circuits percés qui suivent les formes de la surface moulante.

Il existe donc un besoin de disposer d'un dispositif de régulation de température d'un moule énergétiquement efficace et permettant de simplifier la conception et la réalisation du moule

Il a déjà été proposé, dans EP 2 647 479, un procédé de fabrication d'une pièce à base de matière plastique moussée comprenant des étapes d'injection de matière moussée dans un moule chauffé et de refroidissement du moule. Le moule y est toutefois chauffé de manière homogène sur toutes ses parois en contact avec la matière de la pièce à réaliser, par exemple par laser.

Un tel procédé souffre donc d'une grande partie des inconvénients évoqués ci-dessus.

L'invention a pour but d'y remédier en fournissant un dispositif de régulation de la température d'un moule pour la fabrication d'une pièce en matière plastique.

L'invention se distingue par le fait que le dispositif comprend des moyens de chauffage comprenant une pluralité de diodes laser de type à cavité verticale émettant par la surface. Ces diodes qui sont agencées pour être en regard d'une zone localisée de la paroi du moule. Lesdites diodes laser sont aptes à réguler la température de la ladite zone localisée de la paroi du moule par émission d'un rayonnement infrarouge dirigé vers ladite zone localisée de la paroi du moule.

Dans ce qui suit, on qualifiera la diode laser de type à cavité verticale émettant par la surface, de diode VCSEL pour « vertical-cavity surface-emitting laser » en terminologie anglo-saxonne. Le dispositif proposé par l'invention, de par sa régulation de température localisée, permet d'éviter la grande inertie dans les cycles de chauffe et de refroidissement et les déperditions de chaleur entraînées par un chauffage global, tout en étant énergétiquement efficace.

L'usage d'un dispositif selon l'invention évite également de devoir prévoir un réseau complexe de tuyauterie visant à refroidir l'ensemble du moule. Le fait de simplifier ce réseau, voire de ne pas utiliser un tel réseau, permet d'alléger les coûts d'investissement, les temps de montage ou démontage, mais permet également de réduire la taille des blocs constituant le moule.

La maintenance du système de refroidissement est également rendue moins fréquente du fait de la réduction de la taille du réseau et donc des fuites potentielles.

Plus particulièrement, l'invention permet d'exploiter les propriétés particulières des diodes laser VCSEL dans le contexte particulier de la régulation de la température d'un moule pour la fabrication de pièce en matière plastique pour en tirer de nombreux avantages.

En effet, les diodes VCSEL, d'ordinaire utilisées dans le domaine de l'électronique comme capteur, à des fins de reconnaissance de mouvement, ou dans le domaine du soudage de matériaux plastiques ou métalliques, ont jusqu'à présent été considérées comme insuffisamment robustes et/ou fiables pour supporter les conditions de température et de pression élevées (pouvant respectivement aller jusqu'à 200°C et 150bars) régnant dans les moules d'injection ou de compression.

Or, les inventeurs ont constaté, de façon surprenante, que ces diodes VCSEL pouvaient non seulement être utilisées dans un dispositif de régulation de température d'un moule pour la fabrication d'une pièce en matière plastique, mais que leur usage s'avère particulièrement avantageux dans un tel contexte.

En premier lieu, l'usage de diodes VCSEL permet de faire monter très rapidement en température, ce qui peut parfois accélérer encore davantage les cycles de moulage.

En outre, étant particulièrement fiables, leur usage réduit les risques de panne et par conséquent réduit le temps de maintenance et leurs coûts associés.

Par ailleurs, de telles diodes étant de petites dimensions, il est possible d'en disposer un grand nombre pour réguler la température d'une grande surface de la paroi du moule.

L'on peut également faire varier facilement la puissance de telle diodes, et les piloter indépendamment les unes des autres, ce qui permet notamment de les activer de façon sélective pour chauffer certaines zones de la paroi du moule uniquement.

Enfin, contrairement à une tête de rayonnement laser classique, les diodes VCSEL ne nécessitent pas d'être protégées par la réflexion du faisceau laser. Il n'est donc pas nécessaire de prévoir des moyens d'absorption particuliers de ce faisceau.

On pourra par exemple utiliser à cet effet des diodes VCSEL de la marque Phillips connues sous la référence commerciale « Photonics for High Power Applications » telles que celles proposées sur le site : http://www.photonics.philips.com/technology/philips-vcsel-array-technology-for-high-power-applications.

Les propriétés et caractéristiques de ces diodes, telles que leurs dimensions de l'ordre de 40µm, et la longueur d'onde du laser, qui est comprise entre 780nm et 1200nm (infra-rouge proche), sont en effet adaptées à l'application envisagée par l'invention.

Dans un mode de réalisation préféré de l'invention, les moyens de chauffage comprennent une plaque d'isolant thermique disposée entre les diodes laser et la zone localisée de la paroi du moule, ladite plaque d'isolant thermique étant munie d'un orifice adapté au passage du rayonnement infrarouge.

Ceci est particulièrement utile pour protéger les moyens de chauffage dans le cadre d'une fabrication de pièces par un procédé par compression ou injection.

Ceci permet notamment d'empêcher que la tête de rayonnement ne soit endommagée par l'élévation de température de la zone localisée de la paroi.

Dans un mode de réalisation particulier, la plaque d'isolant thermique est réalisée dans un matériau de type microporeux.

On rappelle ici qu'un matériau microporeux est un matériau à structure poreuse, autrement dit comportant des cellules fermées dont les dimensions sont inférieures au libre parcours moyen de certaines molécules.

De tels matériaux sont particulièrement adaptés pour constituer la plaque d'isolation thermique car ils sont par nature constitués d'alvéoles remplies de gaz, et bénéficient par conséquent d'une conductivité thermique très basse.

Dans un mode de réalisation préféré, le dispositif de régulation comprend en outre des moyens de modulation de la puissance du rayonnement de manière à pouvoir faire varier la température de la zone localisée de la paroi du moule.

Ceci permet de mieux contrôler la température de la zone localisée de la paroi et donc de la matière à mouler pour former la pièce.

En particulier, ceci permet d'utiliser des procédés de fabrication par paliers de température comme les procédés de moulage par injection basse pression de résine liquide (Resin Transfer Molding en terminologie anglo-saxonne).

Selon un mode de réalisation particulier, chaque moyen de chauffage est disposé dans un corps métallique destiné à être placé dans une cavité réalisée dans la paroi du moule.

Ceci présente l'avantage de conférer une plus grande modularité au dispositif, et en particulier de pouvoir remplacer et/ou déplacer facilement les moyens de chauffage dans le moule.

De façon avantageuse, chaque moyen de chauffage comprend au moins une interface d'échange thermique réalisée en un matériau thermiquement conducteur et agencée pour être en contact avec une zone localisée de la paroi du moule.

Ceci permet d'améliorer le transfert thermique entre le faisceau laser et la zone localisée de la paroi du moule à chauffer.

De préférence, l'interface d'échange thermique est une plaque d'échange thermique.

Selon un mode de réalisation préféré de l'invention, la plaque d'isolant thermique est disposée entre les diodes laser et la plaque d'échange thermique.

Selon un mode de réalisation particulier de l'invention, la plaque d'échange thermique est réalisée en graphite ou en graphène.

Le graphite est un matériau particulièrement adapté pour constituer la plaque d'échange thermique car il est à la fois particulièrement conducteur thermiquement et résistant aux températures élevées.

Dans un mode avantageux en efficacité, la plaque d'échange thermique présente une forme identique ou similaire à celle de la zone localisée de la paroi du moule afin d'être positionnée en tout point à une distance sensiblement constante de cette zone localisée.

L'invention concerne également un moule pour la fabrication d'une pièce en matière plastique comprenant un dispositif de régulation de la température selon l'invention.

L'invention concerne également un procédé de régulation de la température d'un moule sous pression pour la fabrication d'une pièce en matière plastique par régulation de la température d'une zone localisée de la paroi du moule à l'aide d'une pluralité de diodes laser de type à cavité verticale émettant par la surface, qui est agencée pour être en regard de ladite zone localisée de la paroi du moule.

L'invention sera mieux comprise à la lecture de la description des figures annexées, qui sont fournies à titre d'exemples et ne présentent aucun caractère limitatif, dans lesquelles :
- la figure 1 est une représentation schématique d'une coupe d'un moule pour la fabrication d'une pièce en matière plastique muni d'un dispositif de régulation de la température selon l'invention ;
- la figure 2 est une représentation schématique de moyens de chauffage d'un dispositif de régulation de la température de la figure 1.
- la figure 3 est une représentation schématique de l'architecture des moyens de chauffage.

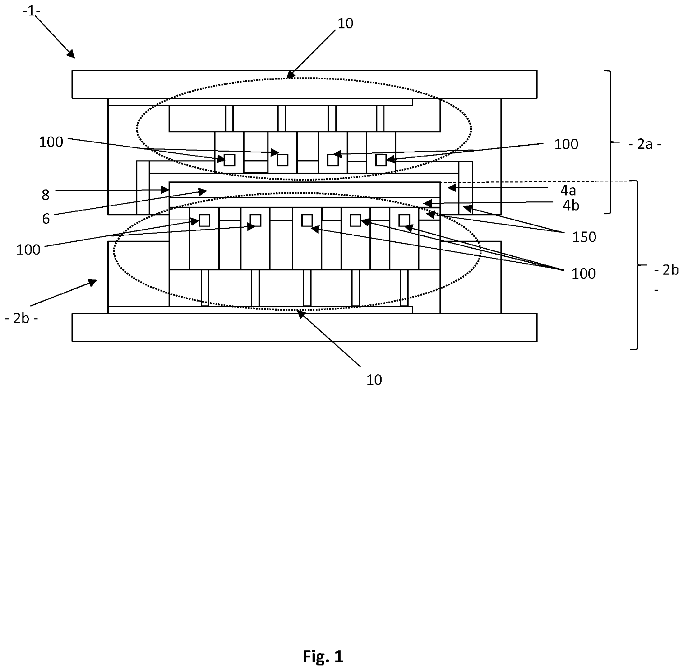

On a représenté sur la figure 1 un moule 1 selon un mode de réalisation de l'invention.

Le moule 1 est un moule destiné à la fabrication de pièces en matière plastique sous pression. On entend par moule sous pression un moule destiné à être utilisé dans des conditions de pression élevées. Le moule 1 comprend un bloc supérieur 2a et un bloc inférieur 2b comprenant respectivement une paroi supérieure 4a et une paroi inférieure 4b qui définissent entre elles une chambre 6. C'est dans cette chambre 6 qu'est moulée la matière formant une pièce 8.

Le moule 1 comprend un dispositif de régulation de la température 10, qui comprend, dans le mode de réalisation ainsi présenté, une pluralité de moyens de chauffage sous la forme d'intensifieurs 100 (« boosters » en terminologie anglo-saxonne).

De préférence, une pluralité d'intensifieurs 100 sont disposés de part et d'autre de la chambre 6, autrement dit des intensifieurs 100 sont disposés à la fois dans le bloc supérieur 2a et dans le bloc inférieur 2b.

Dans un autre mode de réalisation, non représenté, il peut n'y avoir d'intensifieurs 100 que dans le bloc supérieur 2a ou que dans le bloc inférieur 2b.

Dans le mode de réalisation présenté sur la figure 1, les intensifieurs 100 sont régulièrement répartis le long des blocs supérieur 2a et inférieur 2b en regard de la chambre 6. Il va de soi que leur disposition, tout comme leur nombre et leur taille ou leur forme, peut varier selon les utilisations désirées. Ainsi, les intensifieurs 100 peuvent être répartis en quinconce (dans la direction normale à la figure), avec un pas précis, ou non.

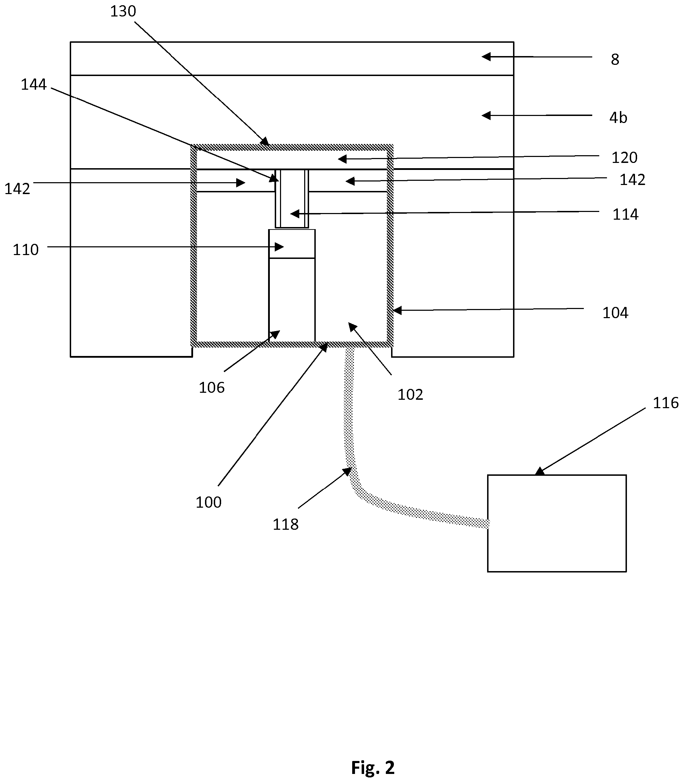

Une partie d'un de ces intensifieurs 100, ainsi que son implantation dans le moule sont représentés de façon plus précise à la figure 2.

Un corps 102, comprenant un intensifieur 100 et réalisé de préférence en matériau métallique, qui est disposé dans une cavité 104 réalisée dans le moule 1. Les intensifieurs 100 sont donc de préférence immobiles par rapport aux blocs 2a, 2b.

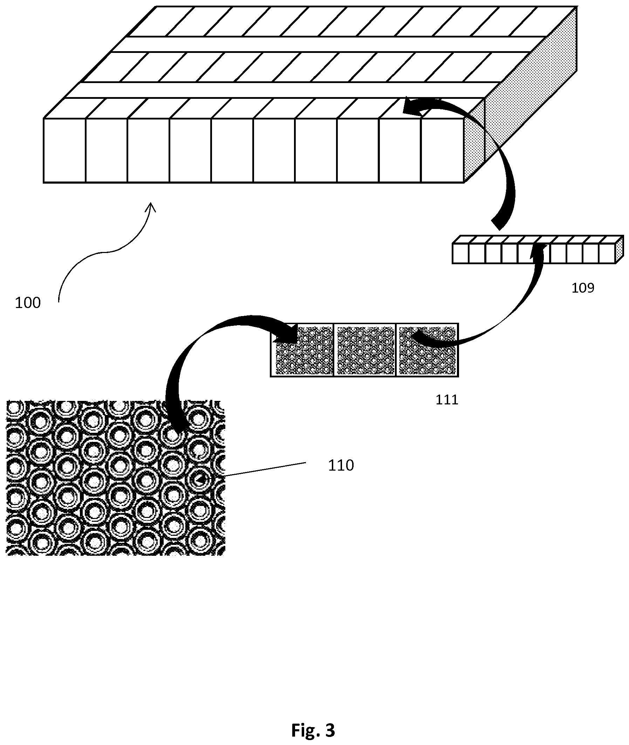

Les intensifieurs 100 sont des éléments chauffant du moule comportant une pluralité d'éléments chauffant élémentaires. Ces éléments élémentaires sont des diodes VSCEL. Ainsi les intensifieurs 100 comportent une pluralité de diodes VSCEL arrangées, par exemple, sous forme de chips 111, eux-mêmes organisés sous forme d'émetteurs 109, eux-mêmes organisés en un ensemble de lignes (voir figure 3).

Dans un premier mode de réalisation, le corps 102 abrite, un intensifieur 100 comportant donc une pluralité de diodes VCSEL 110. Pour des raisons de clarté, on n'a représenté à la figure 2 qu'une seule diode VSCEL 110, intégrée dans un espace 106. Les diodes VCSEL 110 sont de préférence disposées sur une même surface, par exemple rectangulaire.

L'intensifieur 100 comprend par exemple un arrangement de diodes VCSEL de la marque Phillips connue sous la référence « Photonics for High Power Applications » telles que celles proposées sur le site :
http://www.photonics.philips.com/technology/philips-vcsel-array-technology-for-high-power-applications.

Chaque diode VSCEL 110 est ici composée d'une tête de rayonnement adaptée à émettre un rayonnement infra-rouge 114. La longueur d'onde associée au laser est par exemple comprise entre 800nm et 1100nm. Chaque intensifieur 100 est équipé d'une source d'alimentation électrique 116 par l'intermédiaire d'un câble 118.

On notera que sur la figure 1, les sources d'alimentation des intensifieurs 100 ne sont pas dessinées et que la représentation des intensifieurs 100 a été simplifiée pour des raisons de clarté.

Dans un mode particulier, le corps 102 abrite également une interface d'échange thermique 120 qui est disposée dans la cavité 104 de manière à être en contact avec une zone localisée 130 de la paroi inférieure 4b de la chambre 6 du moule.

Dans l'exemple décrit, l'interface d'échange thermique 120 est une plaque d'échange thermique réalisée dans un matériau thermiquement conducteur (à conductivité thermique élevée) tel que le graphite ou le graphène qui est disposée dans la cavité 104 de manière à être en contact avec une zone localisée 130 de la paroi inférieure 4b de la chambre 6 du moule.

On pourra toutefois envisager d'autres interfaces d'échange thermique, comme un revêtement particulier apposé sur la paroi de la cavité 104 en regard de la paroi localisée 130 du moule, ce revêtement étant d'une composition chimique apte à favoriser l'échange thermique entre ces deux parois, par exemple à base de graphite ou de graphène.

La zone localisée 130 est elle-même en contact avec une zone localisée de la pièce à mouler 8.

De préférence, toute la surface de la plaque d'échange thermique 120 est en contact avec une zone localisée 130 de la paroi inférieure 4b associée.

Plus particulièrement encore, la plaque d'échange thermique 120 présente avantageusement une forme identique ou similaire à celle de la zone localisée 130 de la paroi inférieure du moule 4b afin d'être positionnée en tout point à une distance sensiblement constante de cette zone localisée.

La plaque d'échange thermique 120 est placée sur la trajectoire du rayonnement infrarouge 114 de manière à ce que le rayonnement infrarouge 114 puisse la chauffer par rayonnement.

Ainsi, la plaque d'échange thermique 120 étant en contact avec la zone localisée 130 du la paroi inférieure 4b du moule 1, elle transmet par conduction la chaleur issue du rayonnement à la zone localisée 130. Elle ne la transmet en revanche pas ou très peu au reste du moule 1, ce qui évite un chauffage global et les inconvénients qui y sont associés.

La zone localisée 130 de la paroi inférieure 4b étant elle-même en contact avec une zone localisée de la pièce 8 à fabriquer, elle transmet à son tour par conduction cette chaleur à la zone localisée de la pièce 8. Elle ne la transmet en revanche pas à l'ensemble de la pièce 8, ce qui augmente la précision du moulage.

De même, les autres intensifieurs 100 chauffent les zones localisées des parois supérieures 4a et inférieures 4b en face desquels ils se trouvent, et par ce biais les zones localisées de la pièce 8 associées.

De préférence, le dispositif de régulation 10 comprend en outre des moyens de modulation de la puissance du rayonnement, par exemple à travers une modulation (de puissance/intensité, cyclage «marche/arrêt» de certaines diodes 110...) du rayonnement infrarouge 114 afin de pouvoir faire varier la température de la plaque d'échange thermique 120. Ces moyens ne sont pas représentés en détail et sont par exemple intégrés dans la source d'alimentation 116.

Comme on peut le voir sur la figure 2, dans le mode de réalisation préféré représenté ici, le corps 102 abrite également au moins une plaque d'isolant thermique 142 disposée entre la plaque d'échange thermique 120 et l'intensifieur 100

La plaque d'isolant thermique 142 permet de protéger l'intensifieur 100de la chaleur engendrée par les émissions des rayonnements infrarouges 114 sur la plaque d'échange thermique 120. En l'occurrence, on veut ici protéger la pluralité de diodes VSCEL 110.

La plaque d'isolant thermique 142 est à cet effet munie d'un orifice 144 permettant le passage du rayonnement infrarouge 114.

La plaque d'isolant thermique 142 est de préférence réalisée dans un matériau de type microporeux qui présente l'avantage de bénéficier d'une conductivité thermique très basse.

Comme on peut le voir sur la figure 1, dans le mode de réalisation préféré représenté ici, le moule 1 comprend des moyens d'isolation thermique 150 disposés autour des intensifieurs 100. Ces moyens d'isolation thermique sont disposés pour constituer un espace fermé autour de la chambre 6, et ils forment ainsi une enveloppe isolante, telle un sarcophage, autours des intensifieurs 100. Ces moyens permettent ainsi de confiner la chaleur dans la chambre 6. Cette enveloppe est prise en sandwich entre les deux blocs 2a, 2b du moule 1 et doit donc résister à la pression au sein du moule 1.

On notera que d'autres configurations des moyens d'isolation thermique 150 peuvent être envisagées selon la forme et la disposition des blocs supérieur 2a et inférieur 2b.

Dans un autre mode de réalisation de l'invention non représenté, on peut se passer de la plaque d'échange thermique 120.

En effet, les diodes VSCEL, contrairement à une tête de rayonnement laser classique, ne nécessitent pas d'être protégées par la réflexion du laser qui serait absorbée par la plaque d'échange thermique 120 comme indiqué plus haut.

D'une manière générale, l'invention n'est pas limitée aux modes de réalisation présentés et d'autres modes de réalisation apparaîtront clairement à l'homme du métier.

Ainsi, l'intensifieur 100 peut être directement placé dans le moule : dans ce cas, l'émission du rayonnement est directe.

## Revendications

1. Dispositif de régulation de la température d'un moule pour la fabrication d'une pièce (8) en matière plastique, comprenant des moyens de chauffage (100),
**caractérisé en ce que** les moyens de chauffage (100) comprennent une pluralité de diodes laser (110) de type à cavité verticale émettant par la surface, lesdites diodes étant agencées pour être en regard d'une zone localisée (130) de la paroi (4a, 4b) du moule (1), lesdites diodes laser (110) étant aptes à réguler la température de la ladite zone localisée (130) de la paroi (4a,4b) du moule (1) par émission d'un rayonnement infrarouge (114) dirigé vers ladite zone localisée (130) de la paroi (4a,4b) du moule (1).

2. Dispositif de régulation de la température d'un moule selon la revendication 1, **caractérisé en ce que** les moyens de chauffage (100) comprennent une plaque d'isolant thermique (142) disposée entre les diodes laser (110) et la zone localisée (130) de la paroi (4a, 4b) du moule (1), ladite plaque d'isolant thermique (142) étant munie d'un orifice (144) adapté au passage du rayonnement infrarouge (114).

3. Dispositif de régulation de la température d'un moule selon la revendication 2, **caractérisé en ce que** la plaque d'isolant thermique (142) est réalisée dans un matériau de type microporeux.

4. Dispositif de régulation de la température d'un moule selon l'une quelconque des revendications précédentes, **caractérisé en ce qu'**il comprend des moyens de modulation de la puissance du rayonnement de manière à pouvoir faire varier la température de ladite zone localisée (130) de la paroi (4a,4b) du moule (1).

5. Dispositif de régulation de la température d'un moule selon l'une quelconque des revendications précédentes, **caractérisé en ce que** chaque moyen de chauffage (100) est disposé dans un corps métallique (102) destiné à être placé dans une cavité (104) réalisée dans la paroi (4a, 4b) du moule (1).

6. Dispositif de régulation de la température d'un moule selon l'une quelconque des revendications précédentes, **caractérisé en ce que** chaque moyen de chauffage (100) comprend au moins une interface d'échange thermique (120) réalisée en un matériau thermiquement conducteur et agencée pour être en contact avec une zone localisée (130) de la paroi (4a, 4b) du moule (1).

7. Dispositif de régulation de la température d'un moule selon l'une quelconque des revendications précédentes, **caractérisé en ce que** l'interface d'échange thermique est une plaque d'échange thermique (120).

8. Dispositif de régulation de la température d'un moule selon les revendications 2 et 7 prises en combinaison **caractérisé en ce que** la plaque d'isolant thermique (142) est disposée entre les diodes laser (110) et la plaque d'échange thermique (120).

9. Dispositif de régulation de la température d'un moule selon la revendication 7 ou 8, **caractérisé en ce que** la plaque d'échange thermique (120) est une plaque d'échange thermique réalisée en graphite ou en graphène.

10. Dispositif de régulation de la température d'un moule selon l'une quelconque des revendications 7 à 9, **caractérisé en ce que** la plaque d'échange thermique (120) présente une forme identique ou similaire à celle de la zone localisée (130) de la paroi (4a, 4b) du moule afin d'être positionnée en tout point à une distance sensiblement constante de cette zone localisée (130).

11. Moule pour la fabrication d'une pièce (8) en matière plastique comprenant un dispositif de régulation de la température (10) selon l'une quelconque des revendications précédentes.

12. Procédé de régulation de la température d'un moule pour la fabrication d'une pièce (8) en matière plastique par régulation de la température d'une zone localisée (130) de la paroi (4a, 4b) du moule (1) à l'aide d'une pluralité de diodes laser de type à cavité verticale émettant par la surface, qui est agencée pour être en regard de ladite zone localisée (130) de la paroi (4a, 4b) du moule (1).

## Patentansprüche

1. Vorrichtung zur Temperaturregelung einer Form zur Herstellung eines Kunststoffteils (8), die Heizmittel (100) aufweist,
**dadurch gekennzeichnet, dass** die Heizmittel (100) eine Mehrzahl von Laserdioden (110) mit vertikaler Kavität, die von der Oberfläche emittieren, aufweisen, die so angeordnet sind, dass sie einem lokalisierten Bereich (130) der Wand (4a, 4b) der Form (1) zugewandt sind, wobei die Laserdioden (110) eingerichtet sind, die Temperatur des lokalisierten Bereichs (130) der Wand (4a, 4b) der Form (1) durch Emission von Infrarotstrahlung (114) zu regulieren, die auf den lokalisierten Bereich (130) der Wand (4a, 4b) der Form (1) gerichtet ist.

2. Vorrichtung zum Regeln der Temperatur einer Form nach Anspruch 1, **dadurch gekennzeichnet, dass** die Heizmittel (100) eine Wärmeisolationsplatte (142) aufweisen, die zwischen den Laserdioden (110) und dem lokalisierten Bereich (130) der Wand (4a, 4b) der Form (1) angeordnet ist, wobei die Wärmeisolationsplatte (142) mit einer Öffnung (144) versehen ist, die an den Durchgang von Infrarotstrahlung (114) angepasst ist.

3. Vorrichtung zum Regeln der Temperatur einer Form nach Anspruch 2, **dadurch gekennzeichnet, dass** die Wärmeisolationsplatte (142) aus einem mikroporösen Material hergestellt ist.

4. Vorrichtung zum Regeln der Temperatur einer Form nach einem der vorhergehenden Ansprüche, **dadurch gekennzeichnet, dass** sie Mittel zum Modulieren der Strahlungsleistung umfasst, um die Temperatur des lokalisierten Bereichs (130) der Wand (4a, 4b) der Form (1) variieren zu können.

5. Vorrichtung zum Regeln der Temperatur einer Form nach einem der vorhergehenden Ansprüche, **dadurch gekennzeichnet, dass** jedes Heizmittel (100) in einem Metallkörper (102) angeordnet ist, der dazu bestimmt ist, in einem in der Wand (4a, 4b) der Form (1) ausgebildeten Hohlraum (104) eingebracht zu werden.

6. Vorrichtung zum Regeln der Temperatur einer Form nach einem der vorhergehenden Ansprüche, **dadurch gekennzeichnet, dass** jedes Heizmittel (100) mindestens eine Wärmeaustauschgrenzfläche (120) aus einem wärmeleitenden Material aufweist und so angeordnet ist, dass es in Kontakt mit einem lokalisierten Bereich (130) der Wand (4a, 4b) der Form (1) ist.

7. Vorrichtung zum Regeln der Temperatur einer Form nach einem der vorhergehenden Ansprüche, **dadurch gekennzeichnet, dass** die Wärmeaustauschschnittstelle eine Wärmeaustauschplatte (120) ist.

8. Vorrichtung zum Regeln der Temperatur einer Form nach einer Kombination der Ansprüche 2 und 7, **dadurch gekennzeichnet, dass** die Wärmeisolationsplatte (142) zwischen den Laserdioden (110) und der Wärmeaustauschplatte (120) angeordnet ist.

9. Vorrichtung zum Regeln der Temperatur einer Form nach Anspruch 7 oder 8, **dadurch gekennzeichnet, dass** die Wärmetauschplatte (120) eine aus Graphit oder Graphen hergestellte Wärmetauschplatte ist.

10. Vorrichtung zum Regeln der Temperatur einer Form nach einem der Ansprüche 7 bis 9, **dadurch gekennzeichnet, dass** die Wärmetauschplatte (120) eine Form aufweist, die mit der des lokalisierten Bereichs (130) der Wand (4a, 4b) der Form identisch oder dieser ähnlich ist um an jeder Stelle in einem im wesentlichen konstanten Abstand von diesem lokalisierten Bereich (130) positioniert zu werden.

11. Form zur Herstellung eines Kunststoffteils (8) aufweisend eine Vorrichtung zum Regeln der Temperatur (10) nach einem der vorhergehenden Ansprüche.

12. Verfahren zum Regeln der Temperatur einer Form zum Herstellen eines Kunststoffteils (8) durch Regeln der Temperatur eines lokalisierten Bereichs (130) der Wand (4a, 4b) der Form (1) mittels einer Mehrzahl von Laserdioden mit vertikaler Kavität, die von der Oberfläche emittieren und so angeordnet sind, dass sie dem lokalisierten Bereich (130) der Wand (4a, 4b) der Form (1) zugewandt sind.

## Claims

1. Device for controlling the temperature of a mould for manufacturing a plastic part (8) comprising heating means (100),
**characterised in that** the heating means (100) comprise a plurality of vertical cavity surface emitting laser diodes (110), said diodes being arranged to be opposite a localised area (130) of the wall (4a, 4b) of the mould (1), said laser diodes (110) being able to control the temperature of said localised area (130) of the wall (4a, 4b) of the mould (1) by emitting infrared radiation (114) directed towards said localised area (130) of the wall (4a, 4b) of the mould (1).

2. Device for controlling the temperature of a mould according to claim 1, **characterised in that** the heating means (100) comprise a heat insulating plate (142) arranged between the laser diodes (110) and the localised area (130) of the wall (4a, 4b) of the mould (1), said heat insulating plate (142) being provided with an orifice (144) allowing the passage of the infrared radiation (114).

3. Device for controlling the temperature of a mould according to claim 2, **characterised in that** the heat insulating plate (142) is made of a microporous material.

4. Device for controlling the temperature of a mould according to any one of the preceding claims, **characterised in that** it comprises means for modulating the radiation power in order to vary the temperature of said localised area (130) of the wall (4a, 4b) of the mould (1).

5. Device for controlling the temperature of a mould according to any one of the preceding claims, **characterised in that** each heating means (100) is arranged in a metal body (102) intended to be placed in a cavity (104) formed in the wall (4a, 4b) of the mould (1).

6. Device for controlling the temperature of a mould according to any one of the preceding claims, **characterised in that** each heating means (100) comprises at least one heat exchange interface (120) made of a heat-conductive material and arranged such as to be in contact with a localised area (130) of the wall (4a, 4b) of the mould (1).

7. Device for controlling the temperature of a mould according to any one of the preceding claims, **characterised in that** the heat exchange interface is a heat exchange plate (120).

8. Device for controlling the temperature of a mould according to claims 2 and 7 taken in combination, **characterised in that** the heat insulating plate (142) is arranged between the laser diodes (110) and the heat exchange plate (120).

9. Device for controlling the temperature of a mould according to claim 7 or 8, **characterised in that** the heat exchange plate (120) is a heat exchange plate made of graphite or graphene.

10. Device for controlling the temperature of a mould according to any one of claims 7 to 9, **characterised in that** the shape of the heat exchange plate (120) is identical or similar to that of the localised area (130) of the wall (4a, 4b) of the mould in order to be positioned at any point at a substantially constant distance from this localised area (130).

11. Mould for manufacturing a plastic part (8) comprising a device for controlling the temperature (10) according to any one of the preceding claims.

12. Method for controlling the temperature of a mould for manufacturing a plastic part (8) by controlling the temperature of a localised area (130) of the wall (4a, 4b) of the mould (1) using a plurality of vertical cavity surface emitting laser diodes, which is arranged to be opposite said localised area (130) of the wall (4a, 4b) of the mould (1).
